# FASCICULE DE BREVET EUROPEEN

(11) **EP 3 245 094 B1**
(45) Date de publication et mention de la délivrance du brevet: **13.03.2019**
(21) Numéro de dépôt: 16707835.1
(22) Date de dépôt: 15.01.2016
(51) Int. Cl.: B60K 31/00, F02D 31/00

(54) **DISPOSITIF DE MODIFICATION A DISTANCE DE LA PUISSANCE ET/OU DE LA VITESSE D'UN VEHICULE DE LOISIR PRENANT EN COMPTE LA POSITION DE LA PEDALE D'ACCELERATEUR**
VORRICHTUNG ZUR FERNÄNDERUNG DER LEISTUNG UND/ODER GESCHWINDIGKEIT EINES FREIZEITFAHRZEUGS, UNTER BERÜCKSICHTIGUNG DER POSITION DES GASPEDALS
DEVICE INTENDED FOR REMOTELY CHANGING THE POWER AND/OR SPEED OF A RECREATIONAL VEHICLE AND TAKING INTO ACCOUNT THE POSITION OF THE ACCELERATOR PEDAL

(30) Priorité: 15.01.2015 FR 1550301
(43) Date de publication de la demande: 22.11.2017
(73) Titulaire: Of Course, 33380 Biganos (FR)
(72) Inventeur: LANGLET, Frédéric, 33370 Pompignac (FR)
(74) Mandataire: Fantin, Laurent
(86) Numéro de dépôt international: PCT/FR2016/050070
(87) Numéro de publication internationale: WO 2016/113509

(56) Documents cités:
- WO-A1-02/12012
- WO-A1-2004/081900

## Description

La présente invention concerne un dispositif de modification à distance de la commande de puissance et/ou de la vitesse d'un moteur thermique d'un véhicule de loisir.

Les karts constituent des petits véhicules motorisés, qui sont légers et économiques, permettant facilement et avec une grande sécurité d'effectuer du pilotage sur des circuits. Ces véhicules constituent pour un large public un moyen d'apprentissage du pilotage lors de séances d'entraînement ou de courses, ainsi qu'un moyen de loisir et de détente qui peut se pratiquer individuellement ou en groupe.

Les karts peuvent être équipés d'un moteur thermique à deux temps ou à quatre temps. Ils disposent dans ce cas d'une transmission à un seul rapport de vitesse, équipée d'un embrayage de démarrage automatique, ou d'une boîte de vitesses à plusieurs rapports. Il existe aussi des karts à moteur électrique.

Il est connu d'installer sur les karts un boîtier d'information à distance, appelé aussi « transpondeur », constituant un émetteur et récepteur radio répondant à un signal extérieur émis par une balise fixe pour identifier et localiser le kart sur la piste, afin notamment d'enregistrer les temps effectués pour chaque tour de piste.

Dans le cas d'un moteur thermique, le pilote dispose d'une pédale d'accélérateur reliée généralement par un câble à un volet d'ouverture du passage des gaz d'un carburateur, lui permettant de régler la quantité de mélange air et carburant admis dans le moteur pour ajuster la puissance délivrée. Les moteurs des karts peuvent être aussi alimentés par un système d'injection, dans ce cas le pilote commande l'ouverture d'un volet de passage d'air, cette ouverture étant mesurée par un calculateur qui établit la quantité d'essence à injecter. Afin de contrôler à distance la vitesse maximum du kart, il est connu d'utiliser un dispositif comprenant un boîtier électronique installé sur le kart et relié au système d'allumage du moteur thermique afin de couper cet allumage, ou de modifier le réglage de l'avance à l'allumage, qui est commandé à distance par une télécommande manoeuvrée par un responsable de piste.

La télécommande peut imposer notamment une vitesse maximum du kart, par exemple en fonction de l'expérience du pilote, ou une rampe de décélération de ce kart qui effectue son dernier tour afin d'arriver au stand à une vitesse réduite pour assurer la sécurité, en commandant au boîtier électronique des coupures d'allumage successives, ou un décalage de l'avance, qui limitent la vitesse de rotation du moteur suivant ce qui est désiré.

On peut en particulier installer dans le sol des balises fixes afin de définir des zones de décélération, qui sont repérées par le boîtier électronique du kart lors de son passage dessus afin de commander automatiquement son ralentissement à ce point pour sécuriser son arrivée au stand.

Toutefois ce type de dispositif réalisant des coupures d'allumage alors que le pilote maintient une accélération, donne des arrêts successifs brutaux de la puissance délivrée par le moteur thermique qui applique des fortes vibrations désagréables. Dans le cas d'une modification de l'avance à l'allumage, on a alors une mauvaise combustion du carburant et une pollution plus importante.

Par ailleurs, le document US-B2-6876914 présente un système mécanique de limitation de l'ouverture du volet d'admission des gaz dans le moteur thermique, commandé à distance par une télécommande. Dans ce cas on a simplement une modification de la puissance maximum disponible qui laisse une première partie de la course de la pédale d'accélérateur utile, et rend inopérante la deuxième partie de cette course.

Les sensations de pilotage par le conducteur sont alors modifiées avec une réponse de la pédale d'accélérateur très différente. De plus, ce système ne prend pas en compte les conditions réelles de fonctionnement du kart, notamment sa vitesse.

Le document WO 02/12012 A1 divulgue le préambule de la revendication 1.

La présente invention a notamment pour but d'éviter ces inconvénients de la technique antérieure.

Elle propose à cet effet un dispositif de modification à distance de la commande de puissance délivrée par un moteur thermique d'un véhicule de loisir piloté par un conducteur agissant sur une pédale d'accélérateur, comprenant une télécommande envoyant un signal de modulation de la puissance et/ou de la vitesse, ce dispositif comportant un système de mesure de la position de la pédale d'accélérateur, un système de réception du signal de modulation de la puissance et/ou de la vitesse, un système de réglage de l'admission des gaz dans le moteur, et un boîtier électronique relié à ces différents systèmes, établissant des lois de commande du système de réglage de l'admission dépendant de la position de la pédale d'accélérateur et du signal de modulation de la puissance et/ou de la vitesse reçu.

Un avantage de ce dispositif de modification est que l'on peut réaliser facilement en fonction des paramètres contenus dans le signal envoyé par la télécommande, toutes sortes de courbes d'adaptation de la réponse de l'ouverture de l'admission des gaz par le servomoteur, par rapport à la position de la pédale d'accélérateur, donnant notamment une puissance et/ou de la vitesse réduite par une limitation de cette ouverture ne procurant aucun à-coups.

De plus, on peut aussi maintenir active toute la plage de mouvement de la pédale d'accélérateur ce qui laisse au pilote une bonne impression de conduite, malgré une limitation de l'ouverture de l'admission des gaz, en modifiant simplement la règle de proportionnalité entre ces deux mouvements.

Le dispositif de modification à distance selon l'invention peut comporter de plus une ou plusieurs des caractéristiques suivantes, qui peuvent être combinées entre elles.

En particulier, le dispositif de modification peut comporter un système de mesure de la vitesse du moteur thermique ou de la vitesse du véhicule.

Dans ce cas, le boîtier électronique peut prendre en compte la vitesse du moteur thermique ou du véhicule pour établir les lois de commande. On peut réaliser ainsi une régulation en boucle fermée de la vitesse maximum du véhicule qui est précise.

Avantageusement, le boîtier électronique établit des lois de commande utilisant la course complète de la pédale d'accélérateur pour donner sur toute cette course une réponse continûment variable du système de réglage de l'admission des gaz. Les impressions de pilotage restent alors similaires.

Avantageusement, le boîtier électronique établit des lois de commande évoluant de manière dynamique en fonction d'informations reçues. On peut ainsi prendre en temps réel des paramètres comme la position du véhicule pour modifier les lois de commande.

De préférence, les lois de commande peuvent évoluer en fonction de la position du véhicule sur une piste. On peut réaliser ainsi un ralentissement automatique du véhicule pour sécuriser par exemple une zone d'arrivée au stand ou un tronçon de la piste.

Pour cela, au moins une balise fixe par rapport à la piste (implantée par exemple en bordure de piste) transmet à au moins un véhicule (et de préférence à chaque véhicule) passant à proximité de ladite balise un signal de modulation de la puissance et/ou de la vitesse. Avantageusement, le dispositif de modification comporte un servomoteur de commande mécanique d'un volet de passage des gaz d'admission.

Avantageusement, le dispositif de modification comporte un système de mesure de la position de la pédale de frein. On peut réaliser avec la détection de freinage par le conducteur, une sécurité supplémentaire dans le fonctionnement du véhicule. Avantageusement, les systèmes de mesure comprenant les positions de la pédale d'accélérateur ou de frein, et la vitesse de rotation des roues, comportent des capteurs à effet Hall. Ce type de capteur est simple et économique.

Avantageusement, le système de réception du signal de modulation est intégré dans le boîtier électronique. On utilise ainsi un unique boîtier comprenant plusieurs fonctions communes.

Avantageusement, le boîtier électronique comporte des moyens de restitution des informations reçues pendant le fonctionnement du véhicule. On peut suivre de manière différée, ou en temps réel à l'extérieur du véhicule, son fonctionnement pendant un roulage. Dans ce cas, le boîtier électronique peut comporter des moyens d'émission des informations à destination de la télécommande.

Le boîtier électronique peut aussi comporter une prise prévue pour effectuer une liaison vers un ordinateur extérieur, permettant notamment de restituer les informations reçues pendant le fonctionnement du véhicule

D'autres caractéristiques et avantages ressortiront de la description qui va suivre de l'invention, description donnée à titre d'exemple uniquement, en regard des dessins annexés sur lesquels :
- la figure 1 présente un kart roulant sur une piste, équipé d'un dispositif de modulation suivant l'invention ; et
- la figure 2 est un schéma des branchements du boîtier électronique de gestion de ce dispositif.

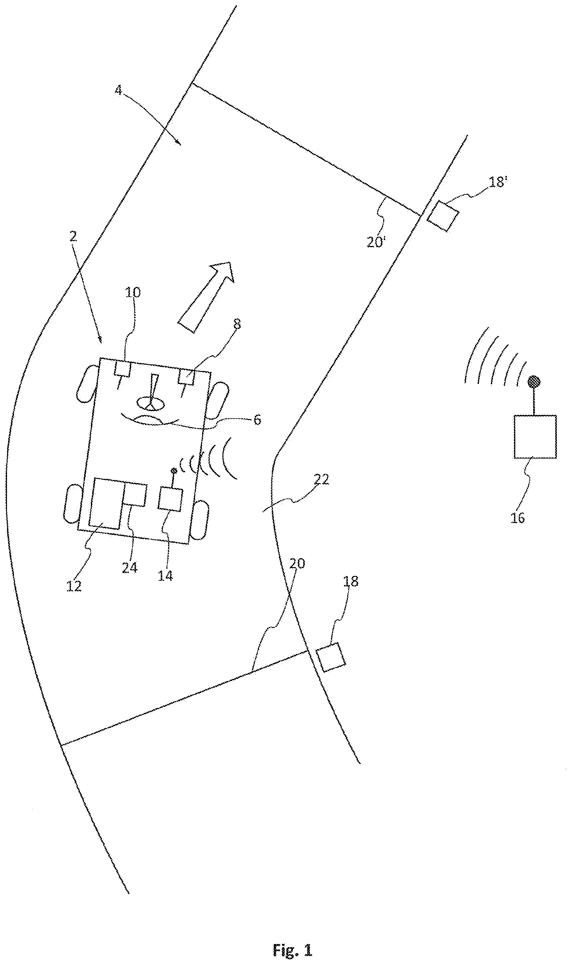

La figure 1 présente un kart 2 roulant sur une piste 4, piloté par un conducteur 6 agissant sur une pédale d'accélérateur située à droite 8, et sur une pédale de frein située à gauche 10.

Le moteur thermique 12 disposé à l'arrière, entraînant directement un arbre transversal reliant les deux roues arrière, comporte un volet de réglage de l'admission des gaz commandé par la pédale d'accélérateur 8.

Le kart 2 comporte un boîtier électronique de gestion 14 réalisant la réception d'un signal de modulation de la puissance et/ou de la vitesse émis par une télécommande 16 située sur le bord de la piste, pour en fonction de la position de la pédale d'accélérateur 8, commander un servomoteur 24 réglant l'ouverture de l'admission des gaz afin d'effectuer une modification à distance de la puissance et/ou de la vitesse maximum délivrée par le moteur thermique 12.

La télécommande 16 peut être commandée manuellement par un responsable de piste, ou automatiquement par un ordinateur.

De préférence, le boîtier électronique de gestion 14 comprend, en plus d'un système de réception d'un signal, un système d'émission d'un signal susceptible de transmettre des informations à distance à la télécommande 16 ou à un autre récepteur. De préférence, les systèmes de réception et d'émission fonctionnent à la même puissance. Selon un mode de réalisation préféré, le boîtier électronique de gestion 14 comprend un unique système de réception et d'émission.

Pour limiter la consommation électrique du boîtier électronique de gestion 14, la réception et l'émission des signaux n'est pas permanente.

Selon un mode de réalisation, le dispositif comprend au moins une balise fixe 18 implantée sur, dans ou à proximité de la piste 4. Selon un mode de réalisation illustré sur la figure 1, le dispositif comprend plusieurs balises fixes 18, 18' qui délimitent un tronçon de piste 22. Chaque balise fixe 18, 18' est configurée pour transmettre un signal de modulation de puissance et/ou de la vitesse à au moins un kart 2 passant à proximité de ladite balise fixe 18, 18'. De préférence, chaque balise est configurée pour transmette un signal de modulation de puissance et/ou de la vitesse à chaque kart 2 passant à proximité. Ainsi, il est possible de réguler la puissance et/ou la vitesse de chaque kart 2 par tronçon de piste, chaque tronçon 22 étant délimitée par une ligne virtuelle amont 20 et une ligne virtuelle aval 20' correspondant chacune au passage des karts 2 à proximité respectivement d'une balise d'entrée 18 et d'une balise de sortie 18' du tronçon 22.

Selon un principe de fonctionnement, chaque balise fixe 18, 18' émet au moins un signal avec une faible portée qui ne peut être réceptionné que par les karts passant à proximité de ladite balise fixe 18, 18'.

Le signal de modulation de la puissance et/ou de la vitesse transmis par chaque balise fixe 18, 18' peut être fixe dans le temps. Selon un mode de fonctionnement privilégié, le signal de modulation de la puissance et/ou de la vitesse transmis par chaque balise fixe 18, 18' varie. Ainsi, la télécommande 16 peut transmettre à au moins une balise fixe 18, 18' un signal de modulation de la puissance et/ou de la vitesse qui est transmis par ladite balise fixe 18, 18' à au moins un kart et de préférence à tous les karts qui passent à proximité de ladite balise fixe 18, 18'.

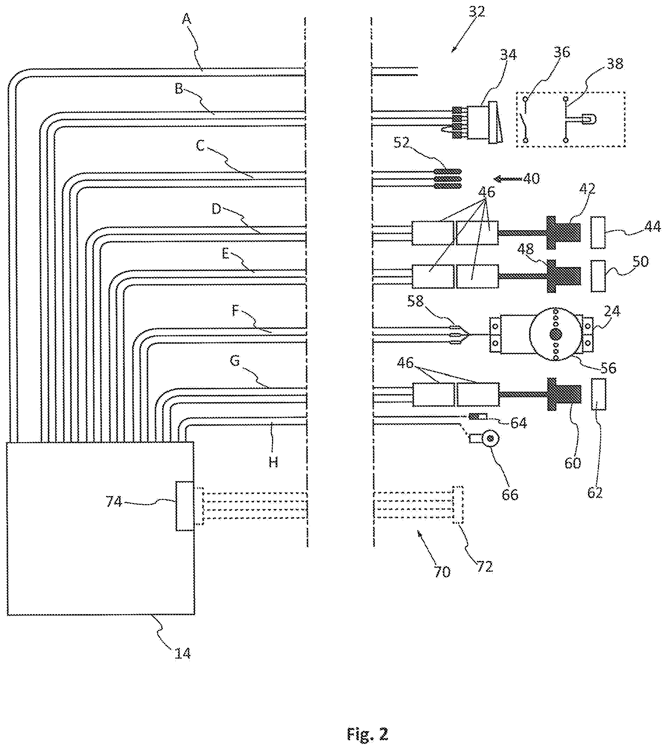

La figure 2 présente le boîtier électronique de gestion 14 relié à une série de fils électriques formant plusieurs faisceaux, décrits ci-après en partant du haut.

Le premier faisceau A comporte deux fils reliés à deux pôles d'une alimentation électrique délivrant un courant continu 32. L'alimentation électrique peut délivrer en particulier un courant à la tension nominale de 12V, compris en pratique entre 9 et 14V, avec une puissance maximale de 20W.

Le deuxième faisceau B comporte trois fils reliés à un bouton poussoir 34 (qui comprend un interrupteur 36) et à un voyant 38. Selon un mode de fonctionnement, le boîtier électronique de gestion 14 comprend un système d'auto-allumage qui permet de l'activer au moment de la mise en marche du moteur 12 du kart 2. Si nécessaire, le bouton poussoir 34 peut être utilisé pour activer le boîtier électronique de gestion 14.

Le troisième faisceau C comporte trois fils reliés à un réseau de multiplexage 40 de plusieurs fonctions du kart, qui peut reprendre notamment la technologie « BUS CAN » couramment utilisée dans les véhicules automobiles.

Le troisième faisceau C est relié au réseau de multiplexage 40 par des liaisons électriques qui sont avantageusement recouvertes par un manchon thermorétractable 52 afin d'assurer une protection de ces liaisons.

Le quatrième faisceau D comporte trois fils reliés par deux fiches de connexion 46, à un capteur à effet Hall de freinage 42 qui mesure le déplacement d'un aimant 44 lié à la pédale de frein du kart 10 afin d'enregistrer des mouvements de cette pédale commandés par le conducteur. On peut en particulier détecter une demande de freinage du conducteur.

De la même manière, le cinquième faisceau E comporte trois fils reliés par deux fiches de connexion 46, à un capteur à effet Hall d'accélération 48 qui mesure le déplacement d'un aimant 50 lié à la pédale d'accélérateur du kart 8, afin d'enregistrer des mouvements de cette pédale commandés par le conducteur.

On mesure en particulier avec suffisamment de précision la position de la pédale d'accélérateur 8 afin de connaître la demande de puissance du conducteur.

Le sixième faisceau F comporte trois fils reliés par des liaisons électriques avantageusement recouvertes par un manchon thermoadhésif 58 de protection de ces liaisons, au servomoteur 24 comportant un disque rotatif 56 sur lequel peut s'accrocher une tige de commande du volet d'admission des gaz dans le moteur thermique.

Le volet d'admission des gaz peut être suivant différents types. En particulier, dans le cas d'un carburateur, il peut former un papillon pivotant autour d'un axe disposé dans le passage des gaz, ou un boisseau cylindrique ou plat, coulissant transversalement par rapport à ce passage pour le fermer. Le volet d'admission des gaz peut être aussi un volet réglant seulement l'entrée d'air, dans le cas d'un moteur à injection.

Le septième faisceau G comporte trois fils reliés par deux fiches de connexion 46, à un capteur à effet Hall 60 qui détecte le déplacement de quatre aimants 62 répartis autour de l'arbre des roues arrière entraîné par le moteur 12.

On obtient ainsi avec la fréquence du signal donné par les aimants 62, divisée par le nombre d'aimants, directement la vitesse de rotation de l'arbre des roues. Ensuite, en prenant en compte le périmètre des roues arrière, on en déduit la vitesse du kart.

On notera que cette technologie disposant des moyens de détection directement sur l'arbre de roue, permet de connaître la vitesse du kart sans utiliser une information venant de l'allumage du moteur et donnant la vitesse de ce moteur, ce qui ne serait pas suffisant dans le cas d'une transmission comprenant différents rapports de vitesse.

En variante, pour un kart équipé d'un moteur comprenant un unique rapport de vitesse, on peut alors prendre directement l'information de vitesse de ce moteur, notamment sur son allumage, et obtenir en prenant en compte le rapport de démultiplication unique la vitesse de rotation de l'arbre des roues.

Le huitième faisceau H comporte deux fils. Un premier fil est relié par une fiche 64 au circuit primaire de la bobine haute tension d'allumage du moteur, qui donne une information sur la vitesse de ce moteur. Un deuxième fil comporte une cosse percée 66 prévue pour recevoir une vis de serrage sur la masse du moteur afin d'obtenir une masse dans le boîtier électronique de gestion 14.

Le boîtier électronique de gestion 14 comporte de plus une prise 74 prévue pour recevoir un cordon adaptateur 70 comprenant une fiche d'extrémité 72 se connectant sur un ordinateur, afin de pouvoir lire les informations dans ce boîtier, ou le programmer.

Le boîtier électronique de gestion 14 comporte un récepteur radio, recevant le signal de modulation émis par la télécommande 16.

Le fonctionnement du dispositif de modification à distance est le suivant.

Le boîtier électronique 14 comporte différentes lois de commande programmées donnant chacune une réponse différente de la commande du servomoteur 24, et donc de l'ouverture du passage des gaz, en fonction de la position de la pédale d'accélérateur 8 mesurée par le capteur à effet Hall d'accélération 48. En particulier, les lois de commande programmées peuvent être dynamiques pour donner par exemple un freinage progressif du kart sur une zone définie, et obtenir son arrêt si nécessaire à un point précis.

L'opérateur ou l'ordinateur commandant la télécommande 16 peut ainsi réaliser un contrôle complet à distance de la puissance et/ou de la vitesse du kart, afin d'assurer en particulier la sécurité.

En fonctionnement normal, quand la fonction de modification à distance de la commande de puissance n'est pas activée, le boîtier électronique de gestion 14 utilise une loi de commande normale qui règle une ouverture régulière du passage des gaz en fonction de l'enfoncement de la pédale d'accélérateur 8, afin d'arriver à la pleine ouverture de ce passage quand la pédale est complètement enfoncée.

On notera qu'entre les deux positions d'extrémité de la pédale d'accélérateur 8, donnant un passage des gaz sensiblement fermé et complètement ouvert, on peut ajuster librement la loi d'ouverture qui n'est pas forcément linéaire, afin d'améliorer la précision ou le confort. Le conducteur dispose alors de la puissance et/ou de la vitesse maximum du moteur, sans aucune limitation.

Quand la fonction de modification à distance de la commande de puissance et/ou de la vitesse est activée, le boîtier électronique de gestion 14 utilise différentes lois de commande particulières du servomoteur 24, qui dépendent du signal de modulation envoyé par la télécommande 16 située en bord de piste.

On trouve en particulier la loi de fonctionnement normal, qui laisse au conducteur la puissance maximum du moteur. On trouve aussi différentes lois de commande appliquant chacune un type de limitation, notamment une limitation fixe de la puissance maximum ou de la vitesse du moteur thermique ou du kart, ou une limitation variable qui limite la puissance ou la vitesse à une valeur variable, donnant par exemple une décélération progressive pour prévoir un arrêt.

Avantageusement, les lois de commande conservent une variation de la puissance disponible occupant toute la course de la pédale d'accélérateur 8, en modifiant la règle de proportionnalité entre cette course de pédale et la plage autorisée d'ouverture de l'admission des gaz, afin de laisser au conducteur des sensations similaires utilisant toute la course de la pédale.

La loi de limitation peut être dynamique en évoluant en temps réel en fonction d'informations reçues, par exemple en fonction de la position du kart concerné ou des autres karts, ou de circonstances extérieures comme la pluie qui réduit l'adhérence de la piste.

En particulier, on peut utiliser une balise 18 pour imposer une réduction de vitesse aux karts passant à proximité de ladite balise 18. On peut aussi utiliser une action sur la pédale de frein 10 mesurée par son capteur 42, pour limiter la puissance délivrée par le moteur thermique 12 afin d'éviter des fausses manoeuvres.

La commande du servomoteur 24 peut notamment prendre en compte en retour des réactions du kart mesurées en temps réel, notamment la vitesse de rotation du moteur thermique 12 ou la vitesse de ce kart, pour effectuer une régulation en boucle fermée comprenant une correction de la consigne donnée au servomoteur 24, afin d'obtenir le réglage de l'admission des gaz correspondant à une vitesse demandée.

Par ailleurs, en complément le dispositif de modification à distance peut proposer une autre fonction ne nécessitant pas de matériel supplémentaire, réalisée de manière économique, donnant en temps réel ou en temps différé des informations sur le fonctionnement du kart qui sont enregistrées par le boîtier électronique 14.

Ces informations peuvent être lues en temps différé par un branchement d'un ordinateur sur la prise 74 du boîtier électronique 14, après un roulage du kart. Elles peuvent être aussi émises en temps réel par le boîtier électronique 14 comprenant un émetteur, pour être lues par l'opérateur ou l'ordinateur contrôlant la télécommande 16.

Le branchement d'un ordinateur sur la prise 74 permet aussi d'effectuer des reprogrammations du boîtier électronique 14.

On peut ainsi recevoir et enregistrer des informations sur le fonctionnement de chaque kart tournant sur la piste, notamment sa puissance ou sa vitesse maximum, ou sa courbe de vitesse le long du circuit. Cette fonction peut servir par exemple pour vérifier l'état des karts, ou de manière pédagogique pour faire progresser le pilotage des conducteurs.

On notera que le dispositif de modification à distance de la commande de puissance et/ou de la vitesse selon l'invention, peut s'appliquer à différents types de véhicules roulants sur un même lieu, comme des karts tout-terrains, ou d'autres types de véhicules à quatre roues ou à deux roues comprenant un réglage de l'admission des gaz dans le moteur, et pouvant tourner sur une piste.

## Revendications

1. Dispositif de modification à distance de la commande de puissance délivrée par un moteur thermique (12) d'un véhicule de loisir (2) piloté par un conducteur (6) agissant sur une pédale d'accélérateur (8), comprenant une télécommande (16) envoyant un signal de modulation de la puissance et/ou de la vitesse, **caractérisé en ce qu'**il comporte un système de mesure (48) de la position de la pédale d'accélérateur (8), un système de réception du signal de modulation de la puissance et/ou de la vitesse, un système de réglage de l'admission des gaz dans le moteur (24), et un boîtier électronique (14) relié à ces différents systèmes, établissant des lois de commande du système de réglage de l'admission (24) dépendant de la position de la pédale d'accélérateur et du signal de modulation de la puissance et/ou de la vitesse reçu.

2. Dispositif de modification selon la revendication 1, **caractérisé en ce qu'**il comporte un système de mesure de la vitesse du moteur thermique ou de la vitesse du véhicule (60).

3. Dispositif de modification selon la revendication 2, **caractérisé en ce que** le boîtier électronique (14) prend en compte la vitesse du moteur thermique ou du véhicule pour établir les lois de commande.

4. Dispositif de modification selon l'une des revendications précédentes, **caractérisé en ce que** le boîtier électronique (14) établit des lois de commande utilisant la course complète de la pédale d'accélérateur (8) pour donner sur toute cette course une réponse continûment variable du système de réglage de l'admission des gaz (24).

5. Dispositif de modification selon l'une des revendications précédentes, **caractérisé en ce que** le boîtier électronique (14) établit des lois de commande évoluant de manière dynamique en fonction d'informations reçues.

6. Dispositif de modification selon la revendication 5, **caractérisé en ce que** les lois de commande évoluent en fonction de la position du véhicule (2) sur une piste.

7. Dispositif de modification selon la revendication 6, **caractérisé en ce qu'**il comporte au moins une balise fixe (18, 18') par rapport à la piste, configuré pour transmettre un signal de modulation de la puissance et/ou de la vitesse à au moins un véhicule (2) passant à proximité de ladite balise (18, 18').

8. Dispositif de modification selon l'une des revendications précédentes, **caractérisé en ce qu'**il comporte un servomoteur (24) de commande mécanique d'un volet de passage des gaz d'admission.

9. Dispositif de modification selon l'une des revendications précédentes, **caractérisé en ce qu'**il comporte un système de mesure (42) de la position de la pédale de frein (10).

10. Dispositif de modification selon l'une des revendications précédentes, **caractérisé en ce que** les systèmes de mesure comprenant les positions de la pédale d'accélérateur (48) ou de frein (42), et la vitesse de rotation des roues (60), comportent des capteurs à effet Hall.

11. Dispositif de modification selon l'une des revendications précédentes, **caractérisé en ce que** le système de réception du signal de modulation est intégré dans le boîtier électronique (14).

12. Dispositif de modification selon l'une des revendications précédentes, **caractérisé en ce que** le boîtier électronique (14) comporte des moyens de restitution des informations reçues pendant le fonctionnement du véhicule.

13. Dispositif de modification selon la revendication 12, **caractérisé en ce que** le boîtier électronique (14) comporte des moyens d'émission des informations à destination de la télécommande (16).

14. Dispositif de modification selon la revendication 12 ou 13, **caractérisé en ce que** le boîtier électronique (14) comporte une prise (74) prévue pour effectuer une liaison vers un ordinateur extérieur.

## Patentansprüche

1. Vorrichtung zur Fernänderung für die Steuerung einer Leistung, die von einem Verbrennungsmotor (12) eines Freizeitfahrzeugs (2) zur Verfügung gestellt wird, das durch einen Fahrer (6) gesteuert wird, der auf ein Gaspedal (8) einwirkt, mit einer Fernsteuerung (16), die ein Änderungssignal für die Leistung und/oder die Geschwindigkeit aussendet, **dadurch gekennzeichnet, dass** diese ein Messsystem (48) für die Stellung des Gaspedals (8), ein Empfangssystem für das Änderungssignal für die Leistung und/oder die Geschwindigkeit, ein Einleitsteuersystem (24) von Gas in den Motor und eine Elektronikeinheit (14) aufweist, die mit diesen unterschiedlichen Systemen verbunden ist und Steuerregeln für das Einleitsteuersystem (24) in Abhängigkeit von der Stellung des Gaspedals und des empfangenen Änderungssignals für die Leistung und/oder die Geschwindigkeit erstellt.

2. Vorrichtung zur Änderung nach Anspruch 1, **dadurch gekennzeichnet, dass** diese ein Messsystem (60) für die Geschwindigkeit des Verbrennungsmotors oder die Geschwindigkeit des Fahrzeugs aufweist.

3. Vorrichtung zur Änderung nach Anspruch 2, **dadurch gekennzeichnet, dass** die Elektronikeinheit (14) die Geschwindigkeit des Verbrennungsmotors oder des Fahrzeugs bei der Vorgabe der Steuerregeln berücksichtigt.

4. Vorrichtung zur Änderung nach einem der vorhergehenden Ansprüche, **dadurch gekennzeichnet, dass** die Elektronikeinheit (14) Steuerregeln unter Verwendung des gesamten Gangs des Gaspedals (8) erstellt, um über diesen gesamten Gang eine ständig variable Antwort des Einleitsteuersystems (24) für das Gas zu bewirken.

5. Vorrichtung zur Änderung nach einem der vorhergehenden Ansprüche, **dadurch gekennzeichnet, dass** die Elektronikeinheit (14) Steuerregeln erstellt, die sich auf dynamische Weise in Abhängigkeit von den empfangenen Informationen entwickeln.

6. Vorrichtung zur Änderung nach Anspruch 5, **dadurch gekennzeichnet, dass** sich die Steuerregeln in Abhängigkeit von der Position des Fahrzeugs (2) auf einem Fahrweg entwickeln.

7. Vorrichtung zur Änderung nach Anspruch 6, **dadurch gekennzeichnet, dass** diese wenigstens einen bezüglich des Fahrwegs festen Leitpfosten (18, 18') aufweist, der dazu eingerichtet ist, ein Änderungssignal für die Leistung und/oder die Geschwindigkeit an wenigstens ein Fahrzeug (2) zu übertragen, das in der Nähe des Leitpfostens (18, 18') vorbeifährt.

8. Vorrichtung zur Änderung nach einem der vorhergehenden Ansprüche, **dadurch gekennzeichnet, dass** diese einen Servomotor (24) für die mechanische Steuerung der Einlassklappe für die Einleitgase aufweist.

9. Vorrichtung zur Änderung nach einem der vorhergehenden Ansprüche, **dadurch gekennzeichnet, dass** diese ein Messsystem (42) für die Stellung des Bremspedals (10) aufweist.

10. Vorrichtung zur Änderung nach einem der vorhergehenden Ansprüche, **dadurch gekennzeichnet, dass** die Messsysteme, die die Stellungen der Gaspedale (48) oder der Bremspedale (42) und die Drehgeschwindigkeit der Räder (60) aufnehmen, Hall-Effekt-Sensoren aufweisen.

11. Vorrichtung zur Änderung nach einem der vorhergehenden Ansprüche, **dadurch gekennzeichnet, dass** das Empfangssystem für das Änderungssignal in die Elektronikeinheit (14) integriert ist.

12. Vorrichtung zur Änderung nach einem der vorhergehenden Ansprüche, **dadurch gekennzeichnet, dass** die Elektronikeinheit (14) Mittel zur Wiederherstellung von während des Betriebs des Fahrzeugs empfangenen Informationen aufweist.

13. Vorrichtung zur Änderung nach Anspruch 12, **dadurch gekennzeichnet, dass** die Elektronikeinheit (14) Mittel aufweist, um Informationen zur Fernsteuerung (16) hin auszusenden.

14. Vorrichtung zur Änderung nach Anspruch 12 oder 13, **dadurch gekennzeichnet, dass** die Elektronikeinheit (14) eine Steckverbindung (74) aufweist, die zum Herstellen einer Verbindung mit einem externen Rechner vorgesehen ist.

## Claims

1. A device for the remote modification of the command for power delivered by an internal combustion engine (12) of a recreational vehicle (2) piloted by a driver (6) acting on an accelerator pedal (8), comprising a remote control (16) which sends a signal for modulating the power and/or the speed, **characterized in that** it comprises a system (48) for measuring the position of the accelerator pedal (8), a system for receiving the signal for modulating the power and/or the speed, a system for regulating the gas inlet in the engine (24), and an electronic unit (14) connected to these various systems, establishing rules for controlling the inlet regulation system (24) depending on the position of the accelerator pedal and on the received signal for modulating the power and/or the speed.

2. The modification device as claimed in claim 1, **characterized in that** it comprises a system for measuring the speed of the internal combustion engine or the speed of the vehicle (60).

3. The modification device as claimed in claim 2, **characterized in that** the electronic unit (14) takes into account the speed of the internal combustion engine or of the vehicle in order to establish the controlling rules.

4. The modification device as claimed in one of the preceding claims, **characterized in that** the electronic unit (14) establishes controlling rules using the full travel of the accelerator pedal (8) to provide, over all of this travel, a continuously variable response of the gas inlet regulation system (24).

5. The modification device as claimed in one of the preceding claims, **characterized in that** the electronic unit (14) establishes controlling rules that change dynamically depending on received information.

6. The modification device as claimed in claim 5, **characterized in that** the controlling rules change depending on the position of the vehicle (2) on a track.

7. The modification device as claimed in claim 6, **characterized in that** it comprises at least one beacon (18, 18') that is fixed with respect to the track, configured to transmit a signal for modulating the power and/or the speed to at least one vehicle (2) passing close to said beacon (18, 18').

8. The modification device as claimed in one of the preceding claims, **characterized in that** it comprises a servomotor (24) for mechanically controlling a flap for the passage of inlet gases.

9. The modification device as claimed in one of the preceding claims, **characterized in that** it comprises a system (42) for measuring the position of the brake pedal (10).

10. The modification device as claimed in one of the preceding claims, **characterized in that** the measurement systems comprising the positions of the accelerator pedal (48) or the brake pedal (42), and the speed of rotation of the wheels (60), comprise Hall effect sensors.

11. The modification device as claimed in one of the preceding claims, **characterized in that** the system for receiving the modulation signal is integrated into the electronic unit (14) .

12. The modification device as claimed in one of the preceding claims, **characterized in that** the electronic unit (14) comprises means for displaying information received during operation of the vehicle.

13. The modification device as claimed in claim 12, **characterized in that** the electronic unit (14) comprises means for sending information to the remote control (16).

14. The modification device as claimed in claim 12 or claim 13, **characterized in that** the electronic unit (14) comprises a port (74) intended for connecting to an external computer.
